# EUROPEAN PATENT SPECIFICATION

(11) **EP 3 036 104 B1**
(45) Date of publication and mention of the grant of the patent: **28.03.2018**
(21) Application number: 14742633.2
(22) Date of filing: 25.06.2014
(51) Int. Cl.: B32B 27/18, B32B 27/32, C08J 5/18

(54) **FLAME RETARDANT FILM**
FLAMMHEMMENDER FILM
FILM IGNIFUGE

(30) Priority: 23.08.2013 US 201361869436 P; 23.06.2014 US 201414311776
(43) Date of publication of application: 29.06.2016
(73) Proprietor: Illinois Tool Works Inc., Glenview, IL 60025 (US)
(72) Inventor: RANCICH, Michael J., Glenview, Illinois 60025 (US)
(74) Representative: HGF Limited
(86) International application number: PCT/US2014/044109
(87) International publication number: WO 2015/026438

(56) References cited:
- EP-A1- 1 356 924
- JP-A- S62 215 642
- JP-A- S62 235 343
- JP-A- 2003 055 507
- KR-A- 20080 066 265

## Description

### CROSS-REFERENCE TO RELATED APPLICATION DATA

### BACKGROUND

Films of all types are used in myriad industries. For example, thin films and laminations are used as vapor jacket materials for pipes, insulation facing for buildings, and jacketing for air/ducts plena. Such films can be used as water and/or air proofing membranes. These films prevent condensation build-up on piping, equipment, buildings and component surfaces which could, in time, have deleterious effects on the piping, equipment and building components if left unabated. Typically, these films are reinforced polymer and paper-based films.

One drawback to these films is that in addition to their barrier properties, they must also meet certain flame retardant properties. A common test for flame retardance of building materials is ASTM E 84, *Standard Test Method for Surface Burning Characteristics of Building Materials.* This test measures flame growth on the underside of a horizontal test specimen using the Steiner tunnel test protocol. The result is the derivation of a Flame Spread Index (FSI) which is a dimensionless number, where an asbestos-cement board has a value of 0 and a red oak board control sample has a value of 100. This test also measures smoke generation as a smoke-developed index (SDI), where an asbestos-cement board has a value of 0 and a red oak board control sample has a value of 100 The SDI is also derived using the Steiner tunnel test protocol.

Polyolefin based films typically do not pass this test at the level required for plenum applications. Films that pass are usually either less than 1/1000 inch (1 mil or 25.4 micrometres) thick or are thick sheets, greater than 1/8 inch (3.18 millimetres) thick, that require very high loading of flame retardants.

Halogenated compounds, such as those discussed in JP S62 235343 A, are commonly used in flame retardant materials. Such materials function well at moderate loadings to reduce the flammability of polyolefin and other polymers. However, halogenated materials tend to generate a considerable amount of smoke when burned. Another concern is that some of the more commonly used brominated flame retardant compounds are being phased out due to health and environmental concerns.

Halogen-free flame retardants are discussed in KR 2008 0066265A and JP 2003 055507. Similarly, halogen-free flame retardants are discussed in EP 1 356 924 A1, wherein a flame retardant in the form of a heat-shrinkable tube is discussed, and in JP S62 215642 A, wherein a halogen-free flame retardant suitable for electronic apparatus is discussed.

Accordingly, there is a need for a polyolefin based film that meets a desired the flame spread index requirement and a smoke developed index.

### SUMMARY

The solution to the above technical problem is achieved by providing the flame retardant film according to claim 1. The film exhibits a flame spread index (FSI) of no more than 20 and a smoke generation index of no more than 60 when tested in accordance with ASTM E 84, *Standard Test Method for Surface Burning Characteristics of Building Materials.*

In a claimed embodiment, the film includes 1.0% to 10% TiO₂ concentrate containing 70% TiO₂ and 1% to 6% of a UV inhibitor concentrate containing 5% inhibitor. The film has a thickness of 3 mils to 10 mils 76.2 micrometres to 254 micrometres).

One suitable polyolefin is polyethylene (PE). The PE can be a high density polyethylene (HDPE). The HDPE can be an oriented HDPE.

An embodiment of the film is formulated from 62.5% HDPE, 25% to 30% Mg(OH)₂ flame retardant concentrate containing 60% Mg(OH)₂. The film formulation can further include 10% TiO₂ concentrate containing 70% TiO₂ and 2.5% of a UV inhibitor concentrate containing 5% inhibitor.

The film can be formed as an oriented film. In an embodiment, the film can be formed from multiple plies of oriented film, the plies being laminated to one another by a lamination material. A suitable lamination material is a polyethylene. The lamination material can be substantially free from flame retardant material.

Each ply can be formulated from polyolefin present in a concentration of 80 to 85% and the flame retardant material is present in a concentration of 6% to 15%. The plies can further include TiO₂ concentrate present in a concentration of 1.5% to 2.0%, a UV inhibitor concentrate present in a concentration of 2.5% to 6.0%, and an antioxidant concentrate present in a concentration of 1.0% to 5.0%. In an embodiment, the lamination material is present at 10% to 20% of the total film weight. The oriented plies are laminated to one another with their respective orientations at an angle to one another between and excluding 0 degrees and 180 degrees. Such a film can include two plies. In an embodiment the includes three plies and at least two of the plies are laminated to one another with their respective orientations at an angle to one another between and excluding 0 degrees and 180 degrees.

These and other features and advantages of the present device will be apparent from the following description, taken in conjunction with the accompanying sheets of drawings. The invention is defined in the appended claims.

### DETAILED DESCRIPTION

While the present disclosure is susceptible of embodiment in various forms, there is shown in the drawings and will hereinafter be described one or more embodiments with the understanding that the present disclosure is to be considered illustrative only and is not intended to limit the disclosure to any specific embodiment described or illustrated.

A polyolefin film is formulated to meet a flame spread index requirement of less than 25 and a smoke developed index of less than 50. One film can be formulated from high density polyethylene (HDPE). In an embodiment, magnesium hydroxide is used to reduce smoke generation without negatively affecting flame spread.

Table 1 below presents an example of one formulation of a 10 mil (254 micrometre) film that resulted in a flame spread index of 15 and a smoke developed index of 15. This film is indicated as Sample No. 10 in Table 3, below.

**TABLE 1 - Formulation for a 10 mil (254 micrometre) Film with E-84 results of 15/15.**

| Material | Loading |
|---|---|
| HDPE | 62.5 % |
| Mg(OH)₂ Flame Retardant Concentrate (60% Mg(OH)₂) | 25 |
| TiO₂ Concentrate (70% TiO2) | 10 |
| UV Concentrate (5% UVI) | 2.5 |

Table 2 below presents an example of one formulation of a 3 mil (76.2 micrometre) oriented cross laminated film (2 ply film with a laminating layer between the two plies) that resulted in a flame spread index of 10 and a smoke developed index of 25. This film is indicated as Sample No. 11 in Table 3, below.

**TABLE 2 - Formulation for a 3 mil (76.2 micrometre) Oriented Cross Laminated Film with E-84 results of 10/25.**

| Material in oriented plies (2 required) | Loading wt % of ply | Weight % of total film |
|---|---|---|
| HDPE | 81 % | 67.5% |
| Mg(OH)₂ Flame Retardant Concentrate (60% Mg(OH)₂) | 10 | 8.33 |
| TiO₂ Concentrate (70% TiO2) | 1.5 | 1.25 |
| UV Concentrate (5% UVI) | 5 | 4.17 |
| Antioxidant Concentrate (4% Antioxidant) | 2.5 | 2.08 |
| | | |
| Material in laminating layer | | |
| Polyethylene | 100% | 16.7 |

As seen from Table 1, a 10 mil (254 micrometre) film (Sample No. 10) formulated from 62.5% HDPE, 25% Mg(OH)₂ flame retardant concentrate containing 60% Mg(OH)₂, 10% TiO₂ concentrate containing 70% TiO₂ and 2.5% of a UV inhibitor concentrate containing 5% inhibitor was prepared.

And, as seen from Table 2, a 3 mil (76.2 micrometre) film (Sample 11) that included two plies, oriented and cross laminated, with each ply formulated from 81% HDPE, 10% Mg(OH)₂ flame retardant concentrate (containing 60% Mg(OH)₂), 1.5% TiO₂ concentrate (containing 70% TiO₂), 5% UV inhibitor concentrate (containing 5% inhibitor) and 2.5% antioxidant concentrate (containing 4% antioxidant) was prepared. The two plies were laminated with polyethylene. The polyethylene is present in a concentration of 16.7% of the film by weight.

These films were compared to samples of various other films to compare the flame spread and smoke developed indices of the films. The flame retardant materials used were those commercially available from Techmer PM of Batavia, IL and Ampacet Corp. of Tarrytown, NY. The other film samples included a known polyvinylidene chloride (PVDC) jacket (Sample No. 1); an HDPE film with no flame retardant (Sample No. 2); compounded halogenated flame retardant films in flame retardant concentrations of 25% and 30% (Techmer FR, Sample Nos. 3 and 4); compounded non-halogenated flame retardant films in flame retardant concentrations of 15%, 30% and 40% (Techmer FR, Sample Nos. 5, 6 and 7); flame retardant films using a Mg(OH)₂ flame retardant concentrate in concentrations of 15% and 30% (Ampacet FR, Sample Nos. 8 and 9); the 10 mil (254 micrometre) film formulated from 62.5% HDPE, 25% Mg(OH)₂ flame retardant (Techmer FR, Sample 10, discussed above) containing 60% Mg(OH)₂, 10% TiO₂ concentrate containing 70% TiO₂ and a UV inhibitor concentrate containing 5% inhibitor; the 3 mil (76.2 micrometre) oriented cross laminated HDPE film compounded with 10% flame retardant (Ampacet FR, Sample No. 11, discussed above); a 5 mil (127 micrometre) oriented cross laminated HDPE film compounded with 10% flame retardant (Ampacet FR, Sample No. 12) and a 6.5 mil (165 micrometre) oriented cross laminated HDPE film compounded with 10% flame retardant (Ampacet FR, Sample No. 13). Both Techmer and Ampacet use a Mg(OH)₂ flame retardant formulated from 60% Mg(OH)₂ in polyethylene; Techmer non-halogenated flame retardant is proprietary; and Techmer halogenated flame retardants FR-1 and FR-2 contain ethylenebistetrabromophthalimide, antimony trioxide and other proprietary materials. The concentrations of each are proprietary. The results of the testing are provided in Table 3, below.

**TABLE 3 - Comparison of Flame Spread and Smoke Generation Results for Various Thin Film Formulations.**

| Sample No. | Material formulation | FR Concentrate manufacturer | Flame Spread (FSI) ASTM E84 | Smoke Generation (SDI) ASTM E84 |
|---|---|---|---|---|
| N/A | Application requirements | | ≤ 25 | ≤ 50 |
| 1¹ | Known jacket material PVDC - 6 mil (152 micrometres) | | 0 | 50 |
| 2 | HDPE - 10 mil (254 micrometres), no FR | | 10 | 105 |
| 3 | 25% hal FR-1 | Techmer | 5 | 90 |
| 4 | 30% hal FR-2 | Techmer | 15 | 85 |
| 5 | 15% non-hal FR | Techmer | 5 | 70 |
| 6 | 30% non-hal FR | Techmer | 0 | 75 |
| 7 | 40% non-hal FR | Techmer | 5 | 95 |
| 8 | 15% Mg(OH)₂ FR | Ampacet | 10 | 60 |
| 9 | 30% Mg(OH)₂ FR | Ampacet | 15 | 25 |
| 10 | 25% Mg(OH)₂ FR | Techmer | 15 | 15 |
| 11^{2,5} | 10% Mg(OH)₂ FR | Ampacet | 10 | 25 |
| 12^{3,5} | 10% Mg(OH)₂ FR | Ampacet | 15 | 35 |
| 13^{4,5} | 10% Mg(OH)₂ FR | Ampacet | 20 | 40 |

| | | | | |
|---|---|---|---|---|
| Notes: 1 - Sample 1 was a 6 mil (152 micrometre) thick known PVDC jacket material. 2 - Sample 11 was formed as a 3 mil (76.2 micrometre) thick HDPE oriented cross laminated film and contains 0.5 mil (12.7 micrometre) non-FR polyethylene laminating layers. 3 - Sample 12 was formed as a 5 mil (127 micrometre) thick HDPE oriented cross laminated film and contains 0.5 mil (12.7 micrometre) non-FR polyethylene laminating layers. 4 - Sample 13 was formed as a 6.5 mil (165 micrometre) thick HDPE oriented cross laminated film and contains three (3) 0.5 mil (12.7 micrometre) non-FR polyethylene laminating layers; the 6.5 mil (165 micrometre) thick product is two (2) 3.0 mil (76.2 micrometre) cross laminated films laminated together. 5 - The FR loading in the cross laminated films is in the oriented plies only. | | | | |

As can be readily seen from TABLE 3, above, a 10 mil (254 micrometre) film (Sample 10) formulated from 62.5% HDPE, 25% Mg(OH)₂ flame retardant concentrate containing 60% Mg(OH)₂, 10% TiO₂ concentrate containing 70% TiO₂ and 2.5% of a UV inhibitor concentrate containing 5% inhibitor showed unexpectedly surprising results with a Flame Spread Index of 15 and a Smoke-Developed Index of 15. This is especially so in that a film using a higher loading of Techmer FR showed the same flame spread results, but higher smoke generation results, when at least the opposite would have been expected with respect to smoke generation. In addition, it was noted that a 3 mil (76.2 micrometre) (overall) thick oriented cross laminated HDPE film (Sample 11) having 10 % Mg(OH)₂ flame retardant concentrate containing 60% Mg(OH)₂, 1.5% TiO₂ concentrate containing 70% TiO₂, and 5.0% of a UV inhibitor concentrate containing 5% inhibitor also showed unexpectedly surprising results with a Flame Spread Index of 10 and a Smoke-Developed Index of 25, which were also well within acceptable FSI and SDI limits of less than 25 and less than 50, respectively.

Moreover, the results in TABLE 3 show that while a only a slight improvement was seen with the halogenated flame retardants compared to non-flame retardant films, when magnesium dihydroxide is used as a flame retardant, smoke is greatly reduced with no or only a slight gain in flame spread. The acceptable levels or values for flame spread (FSI) are less than or equal to 25, and for smoke generation (SDI) are less than or equal to 50.

TABLE 3 also shows that the thin films (e.g., 3.0, 5.0 and 6.5 mil (76.2, 127 and 165 micrometre) films) can be formed as cross laminated films, using cross laminating techniques, such as those disclosed in Barnes, US Patent No. 6,284,344, which is commonly assigned with the present application and is incorporated herein by reference in its entirety. These thin cross laminated films maintain a relatively low FR loading while exhibiting low flame spread and smoke generation indices (10/25, 15/35, 20/40 for the 3.0, 5.0 and 6.5 mil (76.2, 127 and 165 micrometre) films, respectively). These films are also advantageous in that they exhibit higher resistance to tear propagation and higher tensile strength than non-cross laminated films and can thus be used in more challenging installations.

The above-discussed Flame Spread Index (FSI) and Smoke-Developed Index (SDI) tests were conducted in accordance with the aforementioned ASTM E 84, *Standard Test Method for Surface Burning Characteristics of Building Materials* to determine Flame Spread Index (FSI) and Smoke-Developed Index (SDI) for each sample.

Films can be produced using a film blowing method as well as other methods. For example, cast HDPE films will produce similar results. Such HDPE films can be formed by know extrusion processes. As noted above, oriented films, including biaxially oriented and monoaxially oriented films, such as oriented cross laminated HDPE films will produce like results. One such film is a high density polyethylene (HDPE) or a combination of HDPE and low density polyethylene (LDPE) such as that described in the aforementioned patent to Barnes (to which the flame retardant material has been added).

Other films and film forming methods will be recognized by those skilled in the art and are within the scope and spirit of the present disclosure. For example, it is contemplated that other suitable materials can be used in the manufacture of the present flame retardant film, such other suitable materials may include polypropylene or a variety of other polyolefin materials and blends, polyamides, polyethylene terephthalate and other thermoplastic materials compatible with the Mg(OH)₂ flame retardant concentrate. Other film forming methods include cast techniques, extrusion processes and the like.

It will be appreciated that the present films meet the 25/50 requirements for material used in plenum and other applications and are halogen free, thus addressing the considerable smoke generation consideration of halogenated compounds when burned and the health and environmental concerns of brominated flame retardant compounds

In the present disclosure, unless otherwise noted, all percentages (%) are percent by weight of the film or the ply as appropriate. In addition, the words "a" or "an" are to be taken to include both the singular and the plural. Conversely, any reference to plural items shall, where appropriate, include the singular.

## Claims

1. A flame retardant film, comprising:
a thin flexible film having a thickness of 76.2 micrometers to 254 micrometers (3 mils to 10 mils) comprising 60.0% to 87.0% polyolefin and
6% to 30% Mg(OH)₂ flame retardant concentrate containing 60% Mg(OH)₂,
1.0% to 10% TiO₂ concentrate containing 70% TiO₂ and
1% to 6% of a UV inhibitor concentrate containing 5% inhibitor;
wherein the film exhibits a flame spread index (FSI) of no more than 20 and a smoke generation index of no more than 60 when tested in accordance with ASTM E 84, *Standard Test Method for Surface Burning Characteristics of Building Materials.*

2. The flame retardant film of claim 1 wherein the polyolefin is polyethylene.

3. The flame retardant film of claim 2 wherein the polyethylene is a high density polyethylene (HDPE).

4. The flame retardant film of claim 3 wherein the HDPE is an oriented HDPE.

5. The flame retardant film of claim 3 wherein the film is formulated from 62.5% HDPE, 25% to 30% Mg(OH)₂ flame retardant concentrate containing 60% Mg(OH)₂.

6. The flame retardant film of claim 5 wherein the film formulation includes 10% TiO₂ concentrate containing 70% TiO₂ an 2.5% of a UV inhibitor concentrate containing 5% inhibitor.

7. The flame retardant film of claim 5 wherein the film is formed as an oriented film.

8. The flame retardant film of claim 1, wherein the film is formed from multiple plies of oriented film, the plies being laminated to one another by a lamination material.

9. The flame retardant film of claim 8 wherein the lamination material is a polyethylene and wherein the lamination material is substantially free from flame retardant material.

10. The flame retardant film of claim 9 wherein each ply is formulated from polyolefin present in a concentration of 80 to 85% and the flame retardant material is present in a concentration of 6% to 15%.

11. The flame retardant film of claim 10 wherein each ply further includes TiO₂ concentrate present in a concentration of 1.5% to 2.0%, a UV inhibitor concentrate present in a concentration of 1.0% to 6.0%, and an antioxidant concentrate present in a concentration of 1.0% to 5.0%.

12. The flame retardant film of claim 9 wherein the lamination material is present at 10% to 20% of the total film weight.

13. The flame retardant film of claim 8 wherein the oriented plies are laminated to one another with their respective orientations at an angle to one another between and excluding 0 degrees and 180 degrees.

14. The flame retardant film of claim 13 including two plies.

15. The flame retardant film of claim 13 including three plies and wherein at least two of the plies are laminated to one another with their respective orientations at an angle to one another between and excluding 0 degrees and 180 degrees.

## Patentansprüche

1. Flammhemmender Film, umfassend:
einen dünnen flexiblen Film mit einer Dicke von 76,2 Mikrometer bis 254 Mikrometer (3 mil bis 10 mil),
umfassend 60,0 % bis 87,0 % Polyolefin und
6 % bis 30 % Mg(OH)₂-Flammhemmerkonzentrat, das 60 % Mg(OH)₂ enthält,
1,0 % bis 10 % TiO₂-Konzentrat, das 70 % TiO₂ enthält, und
1 % bis 6 % an einem UV-Hemmer-Konzentrat, das 5 % Hemmstoff enthält;
wobei der Film einen Flammenausbreitungsindex (FSI) von nicht mehr als 20 und einen Raucherzeugungsindex von nicht mehr als 60 aufweist, wenn geprüft gemäß ASTM E 84, *Standard Test Method for Surface Burning Characteristics of Building Materials.*

2. Flammhemmender Film gemäß Anspruch 1, wobei das Polyolefin Polyethylen ist.

3. Flammhemmender Film gemäß Anspruch 2, wobei das Polyethylen ein Polyethylen mit hoher Dichte (HDPE) ist.

4. Flammhemmender Film gemäß Anspruch 3, wobei das HDPE ein orientiertes HDPE ist.

5. Flammhemmender Film gemäß Anspruch 3, wobei der Film aus 62,5 % HDPE, 25 % bis 30 % Mg(OH)₂-Flammhemmerkonzentrat, das 60 % Mg(OH)₂ enthält, formuliert ist.

6. Flammhemmender Film gemäß Anspruch 5, wobei die Filmformulierung 10 % TiO₂-Konzentrat, das 70 % TiO₂ enthält, und 2,5 % an einem UV-Hemmer-Konzentrat, das 5 % Hemmstoff enthält, enthält.

7. Flammhemmender Film gemäß Anspruch 5, wobei der Film als orientierter Film gebildet ist.

8. Flammhemmender Film gemäß Anspruch 1, wobei der Film aus mehreren Lagen von orientiertem Film gebildet ist, wobei die Lagen durch ein Laminationsmaterial aneinander laminiert sind.

9. Flammhemmender Film gemäß Anspruch 8, wobei das Laminationsmaterial ein Polyethylen ist und wobei das Laminationsmaterial im Wesentlichen frei von flammhemmendem Material ist.

10. Flammhemmender Film gemäß Anspruch 9, wobei jede Lage aus Polyolefin formuliert ist, das mit einer Konzentration von 80 bis 85 % vorhanden ist, und das flammhemmende Material mit einer Konzentration von 6 % bis 15 % vorhanden ist.

11. Flammhemmender Film gemäß Anspruch 10, wobei jede Lage ferner TiO₂-Konzentrat, das in einer Konzentration von 1,5 % bis 2,0 % vorhanden ist, ein UV-Hemmer-Konzentrat, das in einer Konzentration von 1,0 % bis 6,0 % vorhanden ist, und ein Antioxidationsmittelkonzentrat, das in einer Konzentration von 1,0 % bis 5,0 % vorhanden ist, enthält.

12. Flammhemmender Film gemäß Anspruch 9, wobei das Laminationsmaterial mit 10 % bis 20 % des gesamten Filmgewichts vorhanden ist.

13. Flammhemmender Film gemäß Anspruch 8, wobei die orientierten Lagen mit ihren entsprechenden Orientierungen mit einem Winkel zueinander zwischen und ausgenommen 0 Grad und 180 Grad aneinander laminiert sind.

14. Flammhemmender Film gemäß Anspruch 13, der zwei Lagen enthält.

15. Flammhemmender Film gemäß Anspruch 13, der drei Lagen enthält, wobei wenigstens zwei der Lagen mit ihren entsprechenden Orientierungen mit einem Winkel zueinander zwischen und ausgenommen 0 Grad und 180 Grad aneinander laminiert sind.

## Revendications

1. Film ignifuge, comprenant :
un film flexible mince ayant une épaisseur de 76,2 micromètres à 254 micromètres (3 millièmes de pouce à 10 millièmes de pouce) comprenant
60,0 % à 87,0 % de polyoléfine et
6 % à 30 % de concentré d'agent ignifuge Mg(OH)₂ contenant 60 % de Mg(OH)₂,
1,0 % à 10 % de concentré de TiO₂ contenant 70 % de TiO₂ et
1 % à 6 % d'un concentré d'inhibiteur d'UV contenant 5 % d'inhibiteur ;
le film présentant un indice de propagation des flammes (IPF) ne dépassant pas 20 et un indice de pouvoir fumigène ne dépassant pas 60 lorsqu'ils sont évalués selon la méthode ASTM E 84, « Méthode d'essai normalisée pour les caractéristiques de combustion de surface des matériaux de construction » (*Standard Test Method for Surface Burning Characteristics of Building Materials).*

2. Film ignifuge selon la revendication 1, dans lequel la polyoléfine est un polyéthylène.

3. Film ignifuge selon la revendication 2, dans lequel le polyéthylène est un polyéthylène de haute densité (HDPE).

4. Film ignifuge selon la revendication 3, dans lequel le HDPE est un HDPE orienté.

5. Film ignifuge selon la revendication 3, dans lequel le film est formulé à partir de 62,5 % de HDPE et 25 % à 30 % de concentré d'agent ignifuge Mg(OH)₂ contenant 60 % de Mg(OH)₂.

6. Film ignifuge selon la revendication 5, la formulation du film comprenant 10 % de concentré de TiO₂ contenant 70 % de TiO₂ et 2,5 % d'un concentré d'inhibiteur d'UV contenant 5 % d'inhibiteur.

7. Film ignifuge selon la revendication 5, le film étant formé comme un film orienté.

8. Film ignifuge selon la revendication 1, le film étant formé de multiples épaisseurs de film orienté, les épaisseurs étant assemblées par stratification les unes avec les autres par un matériau de stratification.

9. Film ignifuge selon la revendication 8, dans lequel le matériau de stratification est un polyéthylène et dans lequel le matériau de stratification est sensiblement exempt de matériau ignifuge.

10. Film ignifuge selon la revendication 9, dans lequel chaque épaisseur est formulée à partir d'une polyoléfine présente dans une concentration de 80 à 85 % et le matériau ignifuge est présent dans une concentration de 6 % à 15 %.

11. Film ignifuge selon la revendication 10, dans lequel chaque épaisseur contient en outre un concentré de TiO₂ présent dans une concentration de 1,5 % à 2,0 %, un concentré d'inhibiteur d'UV présent dans une concentration de 1,0 % à 6,0 %, et un concentré d'antioxydant présent dans une concentration de 1,0 % à 5,0 %

12. Film ignifuge selon la revendication 9, dans lequel le matériau de stratification est présent dans une quantité représentant 10 % à 20 % du poids total du film.

13. Film ignifuge selon la revendication 8, dans lequel les épaisseurs orientées sont assemblées par stratification les unes avec les autres, leurs orientations respectives formant un angle les unes par rapport aux autres à l'exclusion de 0 degrés et 180 degrés.

14. Film ignifuge selon la revendication 13, comprenant deux épaisseurs.

15. Film ignifuge selon la revendication 13, comprenant trois épaisseurs et dans lequel au moins deux des épaisseurs sont assemblées par stratification les unes avec les autres, leurs orientations respectives formant un angle les unes par rapport aux autres à l'exclusion de 0 degrés et 180 degrés.
